# EUROPEAN PATENT SPECIFICATION

(11) **EP 0 606 199 B1**
(45) Date of publication and mention of the grant of the patent: **28.10.1998**
(21) Application number: 91916794.0
(22) Date of filing: 18.09.1991
(51) Int. Cl.: F16D 3/84

(54) **EXTERNAL CONVOLUTED HIGH SPEED CONSTANT VELOCITY JOINT BOOT**
GEFALTETE SCHUTZMANSCHETTE FÜR HOCHGESCHWINDIGKEITS-DOPPELGELENK
SOUFFLET DE PROTECTION A CIRCONVOLUTIONS POUR JOINTS HOMOCINETIQUES A GRANDE VITESSE

(43) Date of publication of application: 20.07.1994
(73) Proprietor: GKN Automotive Inc., Auburn Hills, MI 48326-2362 (US)
(72) Inventor: Uchman, Frederick, J., Clarkston, MI 48016 (US); Collins, Theodore, H., Rochester Hills, MI 48309 (US)
(74) Representative: Neumann, Ernst Dieter, Dipl.-Ing.
(86) International application number: US9106765
(87) International publication number: WO9306379

(56) References cited:
- FR-A- 2 257 042
- US-A- 3 798 927
- US-A- 3 830 083
- US-A- 4 083 202
- US-A- 4 693 484
- US-A- 4 735 596
- US-A- 4 895 550
- US-A- 4 927 678

## Description

### 1. FIELD OF THE INVENTION

The invention is related to the field of flexible boots and in particular to flexible boots for sealing the open ends of constant velocity universal joints which compensate for both angular and linear displacement according to the preamble of the independent claim.

### 2. DESCRIPTION OF THE PRIOR ART

Constant velocity universal joints are currently being used in the drive trains of automotive vehicles. In such vehicles, one universal joint connects a propeller shaft to a rotary output of the vehicle's transmission while a second universal joint connects the propeller shaft to a wheel. As the vehicle travels over an uneven surface or leans to one side or the other during turns, the wheels move up and down in a plane approximately normal to the propeller shaft. Therefore, provisions are made in such universal joints to accommodate for the changes in the distance between the wheel and the transmission as the wheel moves up and down or the engine or transmission vibrates under high loads.

Constant velocity mechanical joints such as those disclosed in US-A-4,573,947 or in US-A-4,605,384 provide for both angular and linear displacement between the inner outer joint members. US-A-4,573,947 shows a flexible boot having a linearly extending convolute to compensate for both angular and linear displacement of the inner and outer joint members. In contrast US-A-4,605,384 teaches a flexible boot having a plurality of annular convolutes which diminish in diameter as the boot extends outwardly from the constant velocity universal joint. This type of boot is also taught in US-A-4,730,834 and US-A-4,805,921, in US-A-3,830,083, and in US-A-4,278,262 as well as various other patents. These patents teach a single set of convolutes of diminishing diameters which compensate for the angular as well as the linear displacement of the inner joint members relative to the outer joint members.

In an alternative configuration, US-A-4,556,399 teaches a protective boot for a front wheel vehicle having a first section consisting of a plurality of annular convolutions of diminishing diameters and a single annular convolute spaced therefrom.

It has been found that such boots had to have relatively large diameters to prohibit the seal boot from being over stretched when there is a combination of an angular displacement and linear extension or overly compressed when there is an angular displacement and a linear contraction between the two joint members. The present invention is a flexible boot for a constant velocity universal joint which significantly reduces these problems.

From US-A-4,927,678 there is known a protective bellows comprising an articulation accommodating concial portion adjacent to a large diameter end portion for connection with an outer joint member and a linear displacement accommodating cylindrial portion for connection with a shaft connected to an inner joint member. In this bellows the conical part is provided with a re-inforcement rib and a re-inforcement circular boss which make this conical part very stiff forming obstacles against articulation. This requires for guide lugs within a first root of the linear displacement part of the bellows, generating friction at both articulation and linear displacement relative movements of the outer joint part and inner joint part with the shaft connected thereto. Due to the thickness of the conical part and an uniform transition from the conical angular displacement part to the linear displacement part there is an interdependence of deformations in the conical angular displacement part on the one hand and in the linear displacement part on the other hand. It is the object of the present invention to provide improved means for separating the functions of the angular displacement part and the linear displacement part more clearly avoiding contact of the boot to the shaft at linear displacement and at the small articulation.

### SUMMARY OF THE INVENTION

The invention is given by a resilient boot for a constant velocity universal joint of the type having an outer joint member, an inner joint member articulated relative to the outer joint member and a shaft connected to the inner joint member and concentric therewith characterized by the features of the independent claim. The resilient boot has an articulation accommodating portion attachable to the outer joint member which accommodates for the articulation between the outer and inner joint members of the constant velocity universal joint and a linear displacement accommodating portion attachable to the shaft which accommodates for the linear displacement between the outer and inner joint members. In a preferred embodiment stabilizer means are provided at the junction between the articulation and linear displacement accommodating portions which maintains the rotation of the boot concentric with the axis of the shaft attached to the inner joint members a high rotational speed of the constant velocity joint.

In another embodiment, the boot has two sets of convolutes, one set of which accommodates for the angular displacement between the outer and inner joint members of the constant velocity universal joint and the other set of which accommodates for the linear displacement between the outer and inner joint members.

In another embodiment, the boot comprises a stabilizer disposed intermediate the two sets of convolutes which substantially maintains the rotation of the boot concentric with the shaft of the inner joint members.

Another embodiment provides for a boot in which the annular roots of the convolutes have a cross-sectional thickness which is greater than the cross-sectional thickness of the annular peaks of the convolutes and the annular sidewalls of the convolutes which connect the annular peaks with the annular roots.

Another embodiment is characterized in that the junction between the two sets of convolutes is reinforced and strengthened to increase the rigidity of the boot at a location intermediate its ends. So the diameter of the reinforced junction is slightly larger than the diameter of the inner joint member shaft to inhibit eccentric rotation of the boot at high rotational speeds.

These and other features of the invention will become more apparent from a reading of the detailed description of the invention in conjunction with the drawings.

### BRIEF DESCRIPTION OF THE DRAWINGS

Figure 1 is a partial cross-sectional side view of the boot attached to a constant velocity universal joint;
Figure 2 is a partial cross-sectional side view of the annular root of the articulation accommodating portion of the boot;
Figure 3 is a partial cross-sectional side view of the boot stabilizer portion; and
Figure 4 is a partial cross-sectional side view of the accommodating portion of the boot.

### DETAILED DESCRIPTION OF THE PREFERRED EMBODIMENT

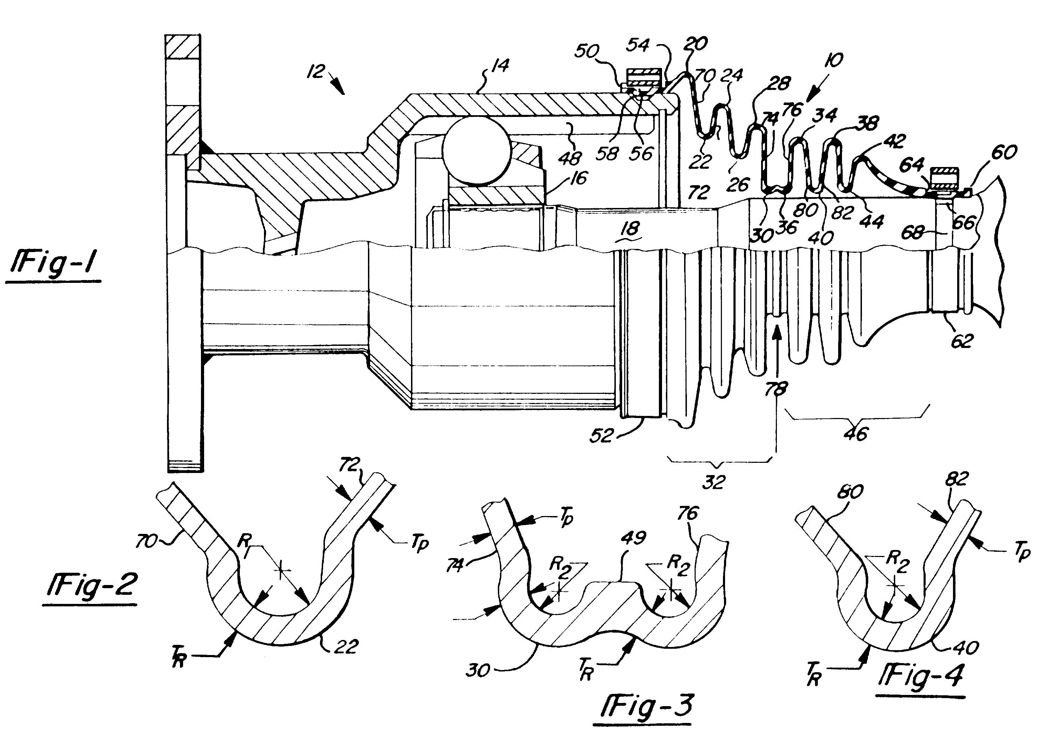

The details of the high speed constant velocity universal joint boot are shown in Figures 1 through 4. Referring to Figure 1, a universal joint boot 10 is shown enclosing the open end of a constant velocity universal joint 12. The constant velocity universal joint 12 has an outer joint member 14, an inner joint member 16, and an inner joint member shaft 18 attached to the inner joint member 16. The inner joint member 16 and inner joint member shaft 18 are angularly and axially displaceable relative to the outer joint member 14.

The boot 10 is preferably made from a co-polymer thermoplastic elastomer such as DuPont Bytrel Grade 8139 or 5612b manufactured by EI. DuPont de Nemours of Wilmington, Delaware.

The boot 10 has a first plurality of annular convolutes defined by annular peaks 20, 24, and 28 and annular roots 22, 26, and 30. This first plurality of convolutes define an articulation accommodating portion 32 of the boot 10 which accommodates for the angular displacement of the inner joint member 16 and the inner joint member shaft 18 relative to the outer joint member 14. As generally taught by the prior art, the diameters of the annular peaks and the annular roots of the annular convolutes in the articulation accommodating portion 32 of the boot decrease as a function of their distance from the outer joint member 14 of the constant velocity universal joint 12.

A second plurality of annular convolutes are defined by annular peaks 34, 38, and 42 and annular roots 36, 40, and 44. This second plurality of annular convolutes define a linear displacement accommodating portion 46 of the boot which accommodates for the linear displacement of the inner joint member 16 relative to the outer joint member 14, along an internal linear ball race 48.

As shown in Figure 1, the annular root 30 of the articulation accommodating portion 32 of the boot is jointed directly to the annular root 36 of the linear displacement accommodating portion 46 of the boot. The diameter of the annular roots 30 and 36 are substantially equal. The diameter of the annular peaks 34 and 38 are substantially equal. The diameter of the annular peak 42 may be equal to the diameters of annular peaks 34 and 38 but preferably is smaller as shown. The diameters of the annular roots 40 and 44 are selected to be slightly larger than the diameters of the shaft 18 such that there will be minimal contact of the annular roots with the shaft 18. The diameter of the annular roots 30 and 36 are slightly smaller (approximately lmm) than the diameters of the annular roots 40 and 44 and are selected so that during high speed operation of the constant velocity universal joint, when the inner joint member is angularly displaced relative to the outer joint member, the annular roots 30 and 36 will ride down close to the shaft 18 maintaining the junction between the articulation accommodating portion 32 and the linear displacement accommodating portion 46 substantially concentric with the shaft 18. This prevents eccentric displacement of the boot during high speed operations, prevents excess vibration of the boot, and significantly increases it operational life.

The boot 10 has a large diameter end portion 50 which is clasped to the outer joint member by a band clamp 52 received in an annular clamp groove 54. An annular rib 56 protruding from the inner surface of the large diameter end portion 50 of the boot 10 is received in a locking groove 58 provided in the external surface of the outer joint member 14 near its open end. The boot 10 also has a small diameter end portion 60 which is sealing clamped to the shaft 18 by a clamp band 62. The small diameter end portion 60 has an annular clamp groove 64 in which the band clamp 62 is received. The small diameter end portion 60 also has an annular rib 66 which is received in an annular locking groove 68 provided in the shaft 18 to prevent linear displacement of the small diameter end portion 60 of the boot along the shaft 18.

The details of the annular roots 22 and 26 are shown in Figure 2. The annular roots 22 and 26 are identical, therefore, only the annular root 22 is discussed in detail. Figure 2 is a cross-sectional side view of the annular root 22 and is shown with the boot 10 in its relaxed state in which annular sidewall portions 70 and 72 of the convolutes connect the annular root 22 with the adjacent annular peaks 20 and 24, respectively. The annular sidewall portions 70 and 72 are attached to the annular root 22 which has a half circular or semi-circular cross section as shown. The half circular configuration of the annular roots 22 and 26 have a first predetermined radius of curvature R₁ and a predetermined wall thickness T_{R} which preferably is thicker than the wall thickness T_{P} of the annular sidewall portions 70 and 72. In general, the cross-sectional thickness of the annular roots may be from one to two times the cross-sectional thickness of the annular sidewall portions and preferably is approximately 1.5 times the cross-sectional thickness of the annular sidewall portions 70 and 72. This increased cross-sectional thickness of the annular roots 22 and 26 increases the durability of these annular roots against wear and abrasion when they contact the shaft 18 during maximum angular displacement of the inner joint member 16 and its shaft 18 relative to the outer joint member 14. In the preferred embodiment, the cross-sectional thickness of the annular roots 22 and 26 range from 1.15 to 1.45mm while the cross-sectional thickness of the annular sidewall portions 70 and 72 may range from 0.6 to 0.9mm.

Figure 3 is a cross-sectional side view of the junction of the articulation accommodating portion 32 and the linear displacement accommodating portion 46 of the boot in which the annular roots 30 and 36 are connected to each other. An annular rib 49 is provided to reinforce the junction between annular root 30 and 36. The annular rib 49 also increase the annular stiffness of this junction and assures that this junction will retain a circular configuration during high speed operation.

The cross section of annular roots 30 and 36 have a generally half or semi-circular configuration having an internal radius of curvature R₂. The radius of curvature R₂ is less than the radius of curvature R₁ of the annular roots 22 and 26 which reduces the flexibility of the annular roots 30 and 36 compared to the annular roots 22 and 26. The annular roots 30 and 36 have a cross-sectional thickness T_{R} which is substantially the same as the cross-sectional thickness of the annular roots 22 and 26. Preferably, the radius of curvature R₂ is 0.7 times the radius of curvature R₁ and in the preferred embodiment the radius of curvature R₁ is approximately 1.Omm. The cross section thickness T_{P} of the annular sidewall portions 74 and 76 which connect the annular peaks 28 and 34 to the annular roots 30 and 36, respectively, is substantially the same as the cross-sectional thickness T_{P} of the sidewall portions 70 and 72 of the articulation accommodating portion 32 of the boot.

The annular roots 30 and 36 in conjunction with the annular rib 49 form a boot stabilizer 76 at the junction between the articulation accommodating portion 32 and the linear displacement accommodating portion 46 which prevents the boot from spinning eccentrically at high rotational speed.

Figure 4 is a cross section of the annular root 40. Since the annular roots 40 and 44 are identical, only the annular root 40 will be discussed in detail. The annular roots 40 and 44 have a half circular or semi-circular cross-sectional shape having an internal radius of curvature R₂. The internal radius of curvature R₂ is substantially the same as the internal radius of curvature R₂ discussed relative to the annular roots 30 and 36 shown in Figure 3. The annular roots 40 and 44 also have a cross-sectional thickness T_{R} which is substantially the same as the cross-sectional thickness T_{R} of the annular roots 30 and 36. Annular sidewall portions 80 and 82 which connect the annular root 40 to the annular peaks 34 and 36 have a cross-sectional thickness T_{P} which also is substantially the same as the cross-sectional thickness of the annular sidewall portions 70, 72, 74 and 76 discussed relative to Figures 2 and 3.

In operation, the annular convolutes of the articulation accommodating portion 32 of the boot accommodates for the angular displacement of the outer joint member 14 relative to the inner joint member 16 and the shaft 18 in a conventional manner. The annular convolutes of the linear displacement accommodating portion 46 of the boot 10 accommodates for the linear displacement of the inner joint member 16 and the shaft 18 relative to the outer joint member 14 resulting from a transverse displacement of the constant velocity universal joint 12 such as the vertical displacement of a driven wheel in an automotive vehicle. The boot stabilizer 78 maintains the junction between the articulation accommodating portion 32 and the linear displacement accommodating portion 46 concentric with the shaft 18 and prevents the boot from spinning eccentrically relative to the shaft 18 at high rotational speeds of the constant velocity universal joint.

Although a preferred embodiment of the boot for the high speed constant velocity universal joint has been shown in the drawings and described in detail in the specification, it is not intended that the boot be limited to the specific structure shown and described herein. It is recognized that those skilled in the art may make structural changes without departing from the invention as set forth in the appended claims.

## Claims

1. A boot (10) for sealing the open end of a constant velocity universal joint (12), said constant velocity universal joint (12) having an outer joint member (14), an inner joint member (16), and a shaft (18) connected to said inner joint member, said boot (10) comprising:
a large diameter end portion (50) attachable to said outer joint member (14);
a small diameter end portion (60) attachable to said shaft (18);
an articulation accommodating portion (32) adjacent to said large diameter end portion (50) for accommodating the angular displacement of said inner joint member (16) relative to said outer joint member (14); and
a linear displacement accommodating portion (46) disposed between said articulation accommodating portion (32) and said small diameter end portion (60) which accommodates for the linear displacement of said inner joint member (16) relative to said outer joint member (14), wherein the end of said articulation accommodating portion (32) opposite said large diameter end portion (50) terminates in a last annular root (30) having a diameter slightly larger than the diameter of said shaft (18) and wherein the end of said linear displacement accommodating portion (46) adjacent to said articulation accommodating portion (32) has a first annular root (36) connected to said last annular root (30), said first annular root (36) having a diameter substantially equal to said diameter of said last annular root (30), characterized in that the diameters of annular roots (40, 44) adjacent the first annular root (36) of said linear displacement accommodating portion (46) are larger than said diameter of said first annular root (36).

2. A boot according to Claim 1 further comprising boot stabilizer means (30, 49, 36) disposed between said articulation accommodating portion (32) and said linear displacement accommodating portion (46) for inhibiting an eccentric rotation of said boot (10) at high rotational speeds.

3. A boot according to one of Claims 1 or 2 wherein said articulation accommodating portion (32) comprises a plurality of convolutes, each convolute of said plurality of convolutes having an annular peak (20, 24, 28) disposed between two annular roots (22, 26, 30), the diameters of said annular peaks (20, 24, 28) and said annular roots (22, 26, 30) diminishing a function of their location relative to said large diameter end portion (50).

4. A boot according to one of Claims 1 to 3 wherein said linear displacement accommodating portion (46) comprises at least two annular convolutes, each annular convolute of said at least two annular convolutes has an annular peak (34, 38, 42) disposed between at least two annular roots (40, 44), the diameter of said annular peaks (34, 38, 42) being substantially equal to each other and the diameter of said annular roots (40, 44) being substantially equal to each other.

5. A boot according to one of Claims 1 to 4 having an external annular rib (49) reinforcing said connection between said first annular root (36) and said last annular root (30), said first annular root (36), said last annular root (30), and said annular rib (49) forming a boot stabilizer inhibiting an eccentric rotation of said boot (10) at high rotational speeds of said constant velocity universal joint (12).

6. A boot according to one of Claims 3 to 5 wherein each annular convolute of said plurality of annular convolutes has at least one annular side portion (70, 72, 74, 76, 80, 82) connecting said annular peak (20, 24, 28, 34, 38, 42) to one of its adjacent annular roots (22, 26, 30, 36, 40, 44) and wherein each annular root has a cross-sectional thickness greater than a cross-sectional thickness of said at least one annular side portion (70, 72, 74, 76, 80, 82).

7. A boot according to one of Claims 3 to 5 wherein predetermined annular convolutes of said plurality of annular convolutes are disposed between a pair of adjacent annular roots (22, 26, 30, 36, 40, 44), and wherein each annular convolute of said predetermined convolutes has a pair of annular side portions (70, 72, 74, 76, 80, 82) connecting said annular peaks (20, 24, 28, 34, 38, 42) to said adjacent annular roots, said annular roots having a cross-sectional thickness greater than a cross-section thickness of said annular side portions (70, 72, 74, 76, 80, 82).

8. A boot according to one of Claims 6 or 7 wherein said cross-sectional thickness of said annular roots (22, 26, 30, 36, 40, 44) is approximately 1.4 times said cross-sectional thickness of said annular side portions (70, 72, 74, 76, 80, 82).

9. A boot according to one of Claims 6 or 7 wherein said cross-sectional thickness of said annular roots (36, 40, 44) of said linear displacement accommodating portion (46) is approximately 1.5 times said cross-sectional thickness of said annular side portions (76, 80, 82).

10. A boot according to one of Claims 3 to 9 wherein said annular roots (22, 26, 30) of said articulation accommodating portion (32) have a first cross-sectional radius of curvature (R₁) and wherein said annular roots (36, 40, 44) of said linear displacement accommodating portion (46) have a second cross-sectional radius (R₂) of curvature which is smaller than said first radius of curvature (R₁).

11. A boot according to one of Claims 3 to 10 wherein said plurality of convolutes of said articulation accommodating portion (32) comprises three annular peaks (20, 24, 28).

12. A boot according to one of Claims 3 to 11 wherein said plurality of convolutes of said linear displacement accommodating portion have two annular peaks.

13. A boot according to one of Claims 3 to 12 wherein said annular roots of said plurality of convolutes of said articulation accommodating portion have a cross-sectional thickness greater than a cross-sectional thickness of said annular peaks.

14. A boot according to Claim 13 wherein said cross-sectional thickness of said annular roots is 1.5 times the cross-sectional thickness of said annular peaks.

15. A boot according to one of Claims 3 to 12 wherein said annular roots of said plurality of convolutes of said linear displacement accommodating portion has a cross-sectional thickness greater than the cross-sectional thickness of said annular peaks.

16. A boot according to Claim 15 wherein said annular roots have a cross-sectional thickness approximately 1.5 times a cross-sectional thickness of said annular peaks.

17. A boot according to one of Claims 1 to 16 wherein said boot is made from a thermoplastic elastomer.

## Patentansprüche

1. Faltenbalg (10) zum Abdichten des offenen Endes eines Gleichlaufdrehgelenks (12), wobei das genannte Gleichlaufdrehgelenk (12) ein Gelenkaußenteil (14), ein Gelenkinnenteil (16) sowie eine Welle (18) umfaßt, wobei die Welle mit dem Gelenkinnenteil verbunden ist; der genannte Faltenbalg umfaßt:
einen Bund (50) mit großem Durchmesser, der am Gelenkaußenteil (14) festlegbar ist,
einen Bund (60) mit kleinem Durchmesser, der an der Welle (18) festlegbar ist,
einen Beugungsaufnahmeabschnitt (32) nächst dem genannten Bund (50) mit großem Durchmesser zur Anpassung an die Winkelverschiebung des Gelenkinnenteils (16) gegenüber dem Gelenkaußenteil, sowie
einen zwischen dem Beugungsaufnahmeabschnitt (32) und dem genannten Bund (60) mit kleinem Durchmesser angeordneten Aufnahmeabschnitt (46) für die Linearverschiebung, der die Anpassung an die Linearverschiebung des genannten Gelenkinnenteil (16) gegenüber dem genannten Gelenkaußenteil (14) ermöglicht, wobei das Ende des genannten Beugungsaufnahmeabschnitts (32) gegenüber dem genannten Bund (50) mit großem Durchmesser in einer letzten inneren Ringfalte (30) endet, die einen Durchmesser aufweist, der geringfügig größer ist als der Durchmesser der genannten Welle (18), und wobei das Ende des genannten Aufnahmeabschnitts (46) für die Linearverschiebung nächst dem genannten Beugungsaufnahmeabschnitt (32) eine erste innere Ringfalte (36) aufweist, die mit der genannten letzten inneren Ringfalte (30) verbunden ist, wobei die genannte erste innere Ringfalte (36) einen Durchmesser aufweist, der im wesentlichen gleich dem genannten Durchmesser der genannten letzten inneren Ringfalte (30) ist,
dadurch gekennzeichnet,
daß die Durchmesser von inneren Ringfalten (40, 44) nächst der ersten inneren Ringfalte (36) des Aufnahmeabschnitts (46) für die Linearverschiebung größer sind als der genannte Durchmesser der genannten ersten inneren Ringfalte (36).

2. Faltenbalg nach Anspruch 1,
ferner umfassend Faltenbalg-Stabilisierungsmittel (30, 49, 36), die zwischen dem genannten Beugungsaufnahmeabschnitt (32) und dem genannten Aufnahmeabschnitt (46) für die Linearverschiebung angeordnet sind, um ein außermittiges Umlaufen des genannten Faltenbalges (10) bei hohen Drehzahlen zu unterbinden.

3. Faltenbalg nach einem der Ansprüche 1 oder 2,
wobei der genannte Beugungsaufnahmeabschnitt (32) eine Mehrzahl von Falteneinheiten aufweist, wobei jede Falteneinheit der genannten Mehrzahl von Falteneinheiten eine äußere Ringfalte (20, 24, 28) aufweist, die zwischen zwei inneren Ringfalten (22, 26, 30) angeordnet ist, wobei die Durchmesser der genannten äußeren Ringfalten (20, 24, 28) und der genannten inneren Ringfalten (22, 26, 30) als Funktion ihres Abstandes zum genannten Bund (50) mit großem Durchmesser abnehmen.

4. Faltenbalg nach einem der Ansprüche 1 bis 3,
wobei der Aufnahmeabschnitt (46) für die Linearverschiebung zumindest zwei Ringfalteneinheiten umfaßt, wobei jede Ringfalteneinheit der zumindest zwei Ringfalteneinheiten eine äußere Ringfalte (34, 38, 42) aufweist, die zwischen zumindest zwei inneren Ringfalten (40, 44) angeordnet sind, wobei die Durchmesser der genannten äußeren Ringfalten (34, 38, 42) im wesentlichen die gleiche Größe aufweisen und die Durchmesser der genannten inneren Ringfalten (40, 44) ebenfalls im wesentlichen gleich groß sind.

5. Faltenbalg nach einem der Ansprüche 1 bis 4
mit einer äußeren verstärkenden Ringrippe (49), die die Verbindung zwischen der genannten ersten inneren Ringfalte (36) und der genannten letzten inneren Ringfalte (30) verstärkt, wobei die genannte erste innere Ringfalte (36), die letzte innere Ringfalte und die genannte verstärkende Ringrippe (49) einen Faltenbalg-Stabilisator bilden, der ein außermittiges Umlaufen des genannten Faltenbalges (10) bei hohen Drehzahlen des Gleichlaufdrehgelenks (12) unterbindet.

6. Faltenbalg nach einem der Ansprüche 3 bis 5,
wobei jede Ringfalteneinheit der genannten Mehrzahl von Ringfalteneinheiten zumindest eine Ringflanke (70, 72, 74, 76, 80, 82) aufweist, die die genannte äußere Ringfalte (20, 24, 28, 34, 38, 42) mit einer ihrer benachbarten inneren Ringfalten (22, 26, 30, 36, 40, 44) verbindet, und wobei jede innere Ringfalte eine Querschnittsdicke aufweist, die größer ist als eine Querschnittsdicke der genannten zumindest einen Ringflanke (70, 72, 74, 76, 80, 82).

7. Faltenbalg nach einem der Ansprüche 3 bis 5,
wobei vorbestimmte Ringfalteneinheiten der genannten Mehrzahl von Ringfalteneinheiten zwischen einem Paar von benachbarten inneren Ringfalten (22, 26, 30, 36, 40, 44) angeordnet sind, und wobei jede Ringfalteneinheit der vorbestimmten Ringfalteneinheiten ein Paar von Ringflanken (70, 72, 74, 76, 80, 82) aufweist, das die genannten äußeren Ringfalten (20, 24, 28, 34, 38, 42) mit den genannten benachbarten inneren Ringfalten verbindet, wobei die inneren Ringfalten eine größere Querschnittsdicke aufweisen, die größer ist als eine Querschnittsdicke der genannten Ringflanken (70, 72, 74, 76, 80, 82).

8. Faltenbalg nach einem der Ansprüche 6 oder 7,
wobei die genannte Querschnittsdicke der genannten inneren Ringfalten (22, 26, 30, 36, 40, 44) etwa das 1,4-fache der genannten Querschnittsdicke der genannten Ringflanken (70, 72, 74, 76, 80, 82) beträgt.

9. Faltenbalg nach einem der Ansprüche 6 oder 7,
wobei die genannte Querschnittsdicke der genannten inneren Ringfalten (36, 40, 44) des genannten Aufnahmeabschnitts (46) für die Linearverschiebung etwa das 1,5-fache der Querschnittsdicke der genannten Ringflanken (76, 80, 82) beträgt.

10. Faltenbalg nach einem der Ansprüche 3 bis 9,
wobei die genannten inneren Ringfalten (22, 26, 30) des Beugungsaufnahmeabschnitts (32) einen ersten Krümmungsradius (R₁) im Querschnitt aufweisen und wobei die genannten inneren Ringfalten (36, 40, 44) des Aufnahmeabschnitts (46) für die Linearverschiebung einen zweiten Krümmungsradius (R₂) im Querschnitt aufweisen, der kleiner ist als der genannte erste Krümmungsradius (R₁).

11. Faltenbalg nach einem der Ansprüche 3 bis 10,
wobei die genannte Mehrzahl von Falteneinheiten des genannten Beugungsaufnahmeabschnitts (32) drei äußere Ringfalten (20, 24, 28) umfaßt.

12. Faltenbalg nach einem der Ansprüche 3 bis 11,
wobei die genannte Mehrzahl von Falteneinheiten des genannten Aufnahemabschnitts (46) für die Linearverschiebung zwei äußere Ringfalten umfaßt.

13. Faltenbalg nach einem der Ansprüche 3 bis 12,
wobei die genannten inneren Ringfalten der Mehrzahl von Falteneinheiten des genannten Beugungsaufnahmeabschnitts eine Querschnittsdicke aufweisen, die größer ist als eine Querschnittsdicke der genannten äußeren Ringfalten.

14. Faltenbalg nach Anspruch 13,
wobei die genannte Querschnittsdicke der genannten inneren Ringfalten das 1,5-fache der Querschnittsdicke der genannten äußeren Ringfalten beträgt.

15. Faltenbalg nach einem der Ansprüche 3 bis 12,
wobei die genannten inneren Ringfalten der genannten Mehrzahl von Falteneinheiten des genannten Aufnahmeabschnitts für die Linearverschiebung eine Querschnittsdicke aufweisen, die größer ist als die Querschnittsdicke der genannten äußeren Ringfalten.

16. Faltenbalg nach Anspruch 15,
wobei die genannte Querschnittsdicke der genannten inneren Ringfalten etwa das 1,5-fache einer Querschnittsdicke der genannten äußeren Ringfalten beträgt.

17. Faltenbalg nach einem der Ansprüche 1 bis 16,
wobei der genannte Faltenbalg aus einem thermoplastischen Elastomer besteht.

## Revendications

1. Soufflet (10) destiné à assurer l'étanchéité d'un joint homocinétique (12), ledit joint homocinétique (12) ayant un élément de joint extérieur (14), un élément de joint intérieur (16), et un arbre (18) relié audit élément de joint intérieur, ledit soufflet (10) comportant :
une partie d'extrémité de grand diamètre (50) pouvant être fixée sur ledit élément de joint extérieur (14);
une partie d'extrémité de petit diamètre (60) pouvant être fixée sur ledit arbre (18);
une partie permettant l'articulation (32) adjacente à ladite partie d'extrémité de grand diamètre (50) afin d'accepter le déplacement angulaire dudit élément de joint intérieur (16) par rapport audit élément de joint extérieur (14); et
une partie permettant le déplacement linéaire (46) disposée entre ladite partie permettant l'articulation (32) et ladite partie d'extrémité de petit diamètre (60) qui permet le déplacement linéaire dudit élément de joint intérieur (16) par rapport audit élément de joint extérieur (14), l'extrémité de ladite partie permettant l'articulation (32) opposée à ladite partie de grand diamètre (50) se terminant par une dernière base annulaire (30) ayant un diamètre légèrement plus grand que le diamètre dudit arbre (18) et l'extrémité de ladite partie permettant le déplacement linéaire (46) adjacente à ladite partie permettant l'articulation (32) ayant une première base annulaire (36) reliée à ladite dernière base annulaire (30), ladite première base annulaire (36) ayant un diamètre sensiblement égal audit diamètre de ladite dernière base annulaire (30), caractérisé en ce que les diamètres des bases annulaires (40, 44) adjacentes à la première base annulaire (36) de ladite partie permettant le déplacement linéaire (46) sont plus grands que ledit diamètre de ladite première base annulaire (36).

2. Soufflet selon la revendication 1, comportant en outre des moyens de stabilisateur de soufflet (30, 49, 36) disposés entre ladite partie permettant l'articulation (32) et ladite partie permettant le déplacement linéaire (46) afin d'empêcher une rotation excentrée dudit soufflet (10) aux vitesses de rotation élevées.

3. Soufflet selon l'une des revendications 1 ou 2, dans lequel ladite partie permettant l'articulation (32) comporte une multiplicité de spires, chaque spire de ladite multiplicité de spires ayant une crête annulaire (20, 24, 28) disposée entre deux bases annulaires (22, 26, 30), les diamètres desdites crêtes annulaires (20, 24, 28) et desdites bases annulaires (22, 26, 30) diminuant en fonction de leur emplacement par rapport à ladite partie d'extrémité de grand diamètre (50).

4. Soufflet selon l'une des revendications 1 à 3, dans lequel ladite partie permettant le déplacement linéaire (46) comporte au moins deux spires annulaires, chaque spire annulaire desdites au moins deux spires annulaires a une crête annulaire (34, 38, 42) disposée entre au moins deux bases annulaires (40, 44), le diamètre desdites crêtes annulaires (34, 38, 42) étant essentiellement égal de l'une à l'autre et le diamètre desdites bases annulaires (40, 44) étant essentiellement égal de l'une à l'autre.

5. Soufflet selon l'une des revendications 1 à 4 ayant une nervure annulaire externe (49) renforçant ladite liaison entre ladite première base annulaire (36) et ladite dernière base annulaire (30), ladite première base annulaire (36), ladite dernière base annulaire (30), et ladite nervure annulaire (49) formant un stabilisateur de soufflet empêchant une rotation excentrée dudit soufflet (10) aux vitesses de rotation élevées dudit joint homocinétique (12).

6. Soufflet selon l'une des revendications 3 à 5, dans lequel chaque spire annulaire de ladite multiplicité de spires annulaires possède au moins une partie latérale annulaire (70, 72, 74, 76, 80, 82) reliant ladite crête annulaire (20, 24, 28, 34, 38, 42) à une de ses bases annulaires adjacentes (22, 26, 30, 36, 40, 44) et dans lequel chaque base annulaire a une épaisseur en coupe plus grande qu'une épaisseur en coupe de ladite au moins une partie latérale annulaire (70, 72, 74, 76, 80, 82).

7. Soufflet selon l'une des revendications 3 à 5, dans lequel des spires annulaires prédéterminées de ladite multiplicité de spires annulaires sont disposées entre une paire de bases annulaires adjacentes (22, 26, 30, 36, 40, 44), et dans lequel chaque spire annulaire desdites spires prédéterminées a une paire de parties latérales annulaires (70, 72, 74, 76, 80, 82) reliant lesdites crêtes annulaires (20, 24, 28, 34, 38, 42) aux dites bases annulaires adjacentes, lesdites bases annulaires ayant une épaisseur en coupe plus grande qu'une épaisseur en coupe desdites parties latérales annulaires (70, 72, 74, 76, 80, 82).

8. Soufflet selon l'une des revendications 6 ou 7, dans lequel ladite épaisseur en coupe desdites bases annulaires (22, 26, 30, 36, 40, 44) est d'approximativement 1,4 fois ladite épaisseur en coupe desdites parties latérales annulaires (70, 72, 74, 76, 80, 82).

9. Soufflet selon l'une des revendications 6 ou 7, dans lequel ladite épaisseur en coupe desdites bases annulaires (36, 40, 44) de ladite partie permettant le déplacement linéaire (46) est d'approximativement 1,5 fois ladite épaisseur en coupe desdites parties latérales annulaires (76, 80, 82).

10. Soufflet selon l'une des revendications 3 à 9, dans lequel lesdites bases annulaires (22, 26, 30) de ladite partie permettant l'articulation (32) ont un premier rayon de courbure en coupe (R₁) et dans lequel lesdites bases annulaires (36, 40, 44) de ladite partie permettant le déplacement linéaire (46) ont un deuxième rayon de courbure en coupe (R₂) qui est plus petit que ledit premier rayon de courbure (R₁).

11. Soufflet selon l'une des revendications 3 à 10, dans lequel ladite multiplicité de spires de ladite partie permettant l'articulation (32) comporte trois crêtes annulaires (20, 24, 28).

12. Soufflet selon l'une des revendications 3 à 11, dans lequel ladite multiplicité de spires de ladite partie permettant le déplacement linéaire possède deux crêtes annulaires.

13. Soufflet selon l'une des revendications 3 à 12, dans lequel lesdites bases annulaires de ladite multiplicité de spires de ladite partie permettant l'articulation ont une épaisseur en coupe plus grande qu'une épaisseur en coupe desdites crêtes annulaires.

14. Soufflet selon la revendication 13, dans lequel ladite épaisseur en coupe desdites bases annulaires est de 1,5 fois l'épaisseur en coupe desdites crêtes annulaires.

15. Soufflet selon l'une des revendications 3 à 12, dans lequel lesdites bases annulaires de ladite multiplicité de spires de ladite partie permettant le déplacement linéaire ont une épaisseur en coupe plus grande que l'épaisseur en coupe desdites crêtes annulaires.

16. Soufflet selon la revendication 15, dans lequel lesdites bases annulaires ont une épaisseur en coupe d'approximativement 1,5 fois l'épaisseur en coupe desdites crêtes annulaires.

17. Soufflet selon l'une des revendications 1 à 16, dans lequel ledit soufflet est fabriqué à partir d'un élastomère thermoplastique.
